# EUROPEAN PATENT APPLICATION

(11) **EP 3 777 560 A1**
(43) Date of publication of application: **17.02.2021**
(21) Application number: 19775989.7
(22) Date of filing: 22.03.2019
(51) Int. Cl.: A23L 11/00, A23L 21/15

(54) **METHOD FOR MANUFACTURING SOYBEAN PASTE FOOD OR GEL FOOD**

(30) Priority: 29.03.2018 JP 2018064055
(71) Applicant: Fuji Oil Holdings Inc., Izumisano-shi, Osaka 598-8540 (JP)
(72) Inventor: YANAGISAWA, Masanobu, Izumisano-shi, Osaka 598-8540 (JP); IKEBUCHI, Rumi, Izumisano-shi, Osaka 598-8540 (JP); NAKANO, Tatsuro, Tsukubamirai-shi, Ibaraki 300-2436 (JP)
(74) Representative: Boult Wade Tennant LLP
(86) International application number: PCT/JP2019/012106
(87) International publication number: WO 2019/188788

(57) **Abstract**

The purpose of the present invention is to provide a method for manufacturing a soybean paste food or gel food that has a good taste and favorable smooth texture. It was found that a soybean paste food or gel food that has a good taste and favorable smooth texture can be obtained by statically heating a liquid food comprising a dietary fiber-containing soybean emulsion composition, said dietary fiber-containing soybean emulsion composition having a dietary fiber content of 2.5 wt% or more, a protein content of 25 wt% or more in terms of dry matter, a lipid content (the content of an extract with a chloroform/methanol mixture solvent) of 25 wt% or more in terms of dry matter, an average particle diameter of 10-100 µm, a moisture content of 70-90 wt%, and a viscosity of 3000 mPa•s or lower.

## Description

### Technical Field

The present invention relates to a method for producing a soybean paste-like food or soybean gel-like food.

### Background Art

Tofu is a representative food obtained by thickening or gelling soymilk. However, tofu has only a difference in hardness such as cotton tofu and silken tofu. In recent years, a paste-like food using soybean is also desired in order to respond to diversification of consumer's preference. In addition, as a method of thickening or gelling soymilk, a method of adding an auxiliary material, such as thickener, modified starch, brine, agar, and gelatin, a method of fermentation, and a method of adding acid are generally known. However, these methods have not always satisfied consumers. Further, the method of adding thickener or modified starch has been a less desirable response to the recent demand for additive reduction, and has not satisfied the need of society in the current situation where an expectation for soybean health effect has increased.

As a soybean emulsion composition other than soymilk, Patent Document 1 discloses a soybean emulsion composition in which a lipophilic protein is increased. Patent Document 2 discloses a method for producing tofu using a gelling agent, and Patent Document 3 discloses that a noodle-shaped tofu processed food can be produced by using a specific gelling agent. In addition, Patent Document 4 discloses that tofu is produced by acid coagulation by lactic acid fermentation using lactic acid bacteria.

### Prior Art Documents

### Patent Documents

Patent Document 1: JP 2012-016348 A
Patent Document 2: JP H10-290678 A
Patent Document 3: JP H05-38269 A
Patent Document 4: JP H02-167044 A

### Summary of Invention

### Problems to Be Solved by Invention

An object of the present invention is to provide a method for producing a soybean paste-like food or soybean gel-like food, having a good taste, and a smooth and favorable texture.

### Means for Solving Problems

It has been known that thickening and gelling may be achieved by adding an auxiliary material, such as thickener, modified starch, brine, agar, and gelatin, to a liquid food containing soymilk. The method of adding a thickener or modified starch may adversely affect the taste and texture of soybean paste-like food or soybean gel-like food. In addition, when a food material such as brine has been added, a smooth and favorable texture has not been obtained. Further, the method of coagulation by lactic acid fermentation or addition of acid does not provide satisfied taste, and coagulation with acid does not give a smooth and good texture but tends to give a hard and uneven texture. As a soybean emulsion composition other than soymilk, a soybean emulsion composition in which a lipophilic protein is increased has been known. However, a method for preparing a soybean paste-like food or soybean gel-like food from a soybean emulsion composition containing dietary fiber has not been proposed.

The present inventors have intensively studied in order to solve the above-mentioned problems. As a result, they have found that a soybean paste-like food or soybean gel-like food may be obtained by subjecting statically heating treatment to a soybean emulsion composition containing dietary fiber having 2.5% by weight or more of dietary fiber content, 25% by weight or more of protein content on a dry matter basis, 25% by weight or more of fat content (referred to as a chloroform/methanol mixed solvent extract) on a dry matter basis, 10 to 100 µm of average particle diameter, 70% by weight to 90% by weight of water content, and 3000 mPa•s or less of viscosity, prepared from a processed soybean having 20 to 77 of NSI as a raw material. The above-mentioned problems have been solved by these findings.

That is, the present invention is:
(1) a method for producing a soybean paste-like food or soybean gel-like food, including subjecting statically heating treatment to a soybean emulsion composition containing dietary fiber having 2.5% by weight or more of dietary fiber content, 25% by weight or more of protein content on a dry matter basis, 25% by weight or more of fat content (referred to as a chloroform/methanol mixed solvent extract) on a dry matter basis, 10 to 100 µm of average particle diameter, 70% by weight to 90% by weight of water content, and 3000 mPa•s or less of viscosity;
(2) the method for producing a soybean paste-like food or soybean gel-like food of (1), where the soybean emulsion composition containing dietary fiber described in (1) has 10 to 30 µm of average particle diameter and 1000 mPa•s or less of viscosity;
(3) the method for producing a soybean paste-like food or soybean gel-like food of (1), where the fat content of the soybean emulsion composition containing dietary fiber described in (1) is 100% by weight or more relative to the protein content;
(4) the method for producing a soybean paste-like food or soybean gel-like food of (2), where the fat content of the soybean emulsion composition containing dietary fiber described in (2) is 100% by weight or more relative to the protein content;
(5) a method for producing a soybean paste-like food or soybean gel-like food, including subjecting a food or drink containing the soybean emulsion composition containing dietary fiber described in (1) to statically heating treatment;
(6) a method for producing a soybean paste-like food or soybean gel-like food, including subjecting a food or drink containing the soybean emulsion composition containing dietary fiber described in (2) to statically heating treatment;
(7) a method for producing a soybean paste-like food or soybean gel-like food, including subjecting a food or drink containing the soybean emulsion composition containing dietary fiber described in (3) to statically heating treatment;
(8) a method for producing a soybean paste-like food or soybean gel-like food, including subjecting a food or drink containing the soybean emulsion composition containing dietary fiber described in (4) to statically heating treatment;
(9) the method for producing a soybean paste-like food or soybean gel-like food of (1), where the statically heating treatment is a retort heat treatment;
(10) the method for producing a soybean paste-like food or soybean gel-like food of (2), where the statically heating treatment is a retort heat treatment;
(11) the method for producing a soybean paste-like food or soybean gel-like food of (3), where the statically heating treatment is a retort heat treatment;
(12) the method for producing a soybean paste-like food or soybean gel-like food of (4), where the statically heating treatment is a retort heat treatment;
(13) the method for producing a soybean paste-like food or soybean gel-like food of (5), where the statically heating treatment is a retort heat treatment;
(14) the method for producing a soybean paste-like food or soybean gel-like food of (6), where the statically heating treatment is a retort heat treatment;
(15) the method for producing a soybean paste-like food or soybean gel-like food of any one of (1) to (14), where a heating temperature is 90°C or higher and a heating time is 1 minute or longer, in the statically heating treatment.

### Effect of Invention

The present invention enables to provide a soybean paste-like food or soybean gel-like food, having good flavor, and smooth and favorable texture.

### Mode for Carrying Out Invention

### (Soybean emulsion composition containing dietary fiber)

A soybean emulsion composition containing dietary fiber used in the present invention is characterized to have 2.5% by weight or more of dietary fiber content, 25% by weight or more of protein content on a dry matter basis, 25% by weight or more of fat content (referred to as a chloroform/methanol mixed solvent extract) on a dry matter basis, 10 to 100 µm of average particle diameter, 70% by weight to 90% by weight of water content, and 3000 mPa•s or less of viscosity. That is, it is a soybean-derived emulsion composition characterized in that fat (neutral lipid and polar lipid) and protein are contained in a specific range, and that fiber (dietary fiber) is also contained.

### (Dietary fiber)

A dietary fiber content of the soybean emulsion composition containing dietary fiber used in the present invention is 2.5% by weight or more, preferably 3% by weight or more. An upper limit of the dietary fiber content is not limited, but is preferably 10% by weight or less, more preferably 8% by weight or less. By containing dietary fiber in the emulsion composition, a thickening effect is exhibited. When the dietary fiber content is too low, thickening tends not to occur, and when the dietary fiber content is too high, the texture tends to be rough. The dietary fiber content is a value measured by an enzymatic-gravimetric method.

### (Protein)

A protein content of the soybean emulsion composition containing dietary fiber used in the present invention is 25% by weight or more, preferably 30% by weight or more, on a dry matter basis. An upper limit of the protein content is not limited, but is preferably 50% by weight or less, more preferably 45% by weight or less. Much higher the protein content tends to provide harder texture of the obtained paste-like food, and a smooth texture may not be obtained in some cases.

The protein content is calculated by multiplying a nitrogen content, measured by Kjeldahl method, by the nitrogen conversion coefficient of 6.25.

### (Fat)

A fat content is generally determined by ether extraction method. However, the soybean emulsion composition containing dietary fiber used in the present invention contains not only neutral lipid but also large amount of polar lipid which is hardly extracted with ether. Therefore, a fat content of the present invention is determined by extracting with a mixed solvent of chloroform and methanol at a volume ratio of 2:1 at atmospheric boiling point for 30 minutes, and calculating fat content with assuming the obtained extract as a total fat. As a solvent extraction equipment, "Soxtec" manufactured by FOSS Co. may be used. Hereinafter, the above measurement method is also called as "chloroform/methanol mixed solvent extraction method".

A fat content of the soybean emulsion composition containing dietary fiber used in the present invention is 25% by weight or more, preferably 30% by weight or more, more preferably 40% by weight or more on a dry matter basis. An upper limit of the fat content is not limited, but is preferably 65% by weight or less, more preferably 55% by weight or less.

In addition, the fat content is preferably 100% by weight or more, more preferably 120% by weight or more relative to protein content on a dry matter basis, that is, fat content is preferably more than protein content. The obtained paste-like food tends to have good texture as higher fat content.

### (Water content)

The soybean emulsion composition containing dietary fiber used in the present invention usually has a property similar to fresh cream and a water content of 70% to 90%, preferably 75 to 90%, more preferably 80 to 90%. When the water content is too low, a fluidity of the composition may be impaired. On the contrary, when the water content is too high, a taste of the composition may be less rich and may feel watery.

### (Average particle diameter and viscosity)

An average particle diameter of the soybean emulsion composition containing dietary fiber in the wet state is 10 to 100 µm, more preferably 10 to 35 µm, where the particle diameter is measured with a Coulter counter.

When particles of the soybean emulsion composition containing dietary fiber are fine, fluidity will increase. On the contrary, when particles of the soybean emulsion composition containing dietary fiber are coarse, fluidity will be lost, and thickening effect from statically heating treatment described below will not be recognized.

In order to obtain the thickening effect of the statically heating treatment of the soybean emulsion composition containing dietary fiber more significantly, it is preferable to maintain liquidity of the composition. And a viscosity measured with a B-type viscometer (measurement temperature: 10°C, measurement time: 1 minute) is preferably 3000 mPa•s or less, more preferably 1000 mPa•s or less.

### (Example of aspect of producing soybean emulsion composition containing dietary fiber)

The soybean emulsion composition containing dietary fiber used in the present invention may be obtained, for example, by preparing a suspension by adding water to fat-containing soybean, subjecting the suspension to solid-liquid separation to transfer neutral lipid and polar lipid to an insoluble fraction containing dietary fiber, removing soluble fraction containing protein and sugar, and then recovering the insoluble fraction. The aspect of production will be exemplified, but the soybean emulsion composition containing dietary fiber used in the present invention not limited to the specific aspect as long as it has the specific composition and physical properties described above. For example, it may be produced based on a method, such as method described in Patent Document 1, Japanese Patent Publication No. 2009-528847, and Japanese Patent Publication No. 2010-599928.

### • Raw material soybean and processing thereof

As a raw material soybean of the soybean emulsion composition containing dietary fiber, fat-containing soybean, such as full fat soybean and partially defatted soybean, may be used. An example of partially defatted soybean is obtained by partially defatting full fat soybean by a physical extraction process such as compression extraction. Generally, full fat soybean contains about 20 to 30% by weight of fat on a dry matter basis. And, some special soybean varieties have 30% by weight or more of fat. It is suitable, but not limited to contain at least 15% by weight, preferably 20% by weight or more of fat. A form of the raw material may be half-cracked soybean, grits, or powder. It is difficult to obtain the soybean emulsion composition containing dietary fiber from excessively defatted and too low fat content soybean. In particular, defatted soybean extracted with an organic solvent such as hexane and having 1% by weight or less of neutral lipid content may impair the good flavor of soybean and may not be preferable.

Generally, most of protein in the above described fat-containing soybean is nature and soluble in the natural state. In the present invention, such an unmodified fat-containing soybean may be used, or a processed soybean that has been subjected to a denaturation treatment in advance may be used. A degree of heat denaturation of soybean may be determined using NSI (Nitrogen Solubility Index), which is used as a measure of protein solubility.

A nature fat-containing soybean usually has more than 90 of NSI. And, a degree of denaturation increases, protein becomes insoluble and the NSI value decreases.

The fat-containing soybean used in the present invention may have 20 to 100 of NSI. In one embodiment, a modified soybean, which is subjected to a process so that NSI of the modified soybean is 20 to 77, preferably 20 to 70, may be used. More preferable lower limit of NSI may be 40 or more, more preferably 41 or more, further preferably 43 or more, and most preferably 45 or more. More preferable upper limit of NSI may be less than 75, more preferably less than 70, and low NSI soybean having less than 65, less than 60, or less than 58 of NSI may be used. In this embodiment, the obtained soybean paste-like food or soybean gel-like food has favorable taste with less green odor and conversely less roasting odor due to overheating, and it is preferable.

The processed soybeans may be obtained by processing such as heat treatment and alcohol treatment. The processing means is not particularly limited, but for example, heat treatment such as dry heat treatment, steam treatment, superheated steam treatment, and microwave treatment; hydrous ethanol treatment; high pressure treatment; and combinations thereof may be used.

In addition, in another embodiment, fat-containing soybean having NSI of 60 to 100, preferably 80 to 95 may be selected with focusing on protein extraction efficiency.

NSI is expressed as ratio (% by weight) of water-soluble nitrogen (crude protein) to total nitrogen content and determined by a prescribed method. In the present invention, NSI is determined by the following method.

To 2.0 g of sample is added 100 ml of water. The mixture is stirred at 40°C for 60 minutes, and then centrifuged at 1400 × g for 10 minutes to obtain supernatant 1. To the residual precipitate is added 100 ml of water. The mixture is stirred at 40°C for 60 minutes, and then centrifuged at 1400 × g for 10 minutes to obtain supernatant 2. The supernatant 1 and supernatant 2 are combined, and water is added to 250 ml. After filtering the mixture with No.5A filter paper, nitrogen content in the filtrate is determined by Kjeldahl method. At the same time, nitrogen content in the sample is determined by Kjeldahl method. NSI is the ratio of nitrogen in the filtrate (water-soluble nitrogen) to total nitrogen in the sample, and expressed as % by weight.

The above modified soybean is preferably subjected to a dry or wet tissue destruction treatment such as grinding, crushing and depressing before a water extraction. The soybean may be swelled by water immersion or steaming before the tissue destruction treatment. By the swelling, an amount of energy required to the tissue destruction may be reduced and component having unpleasant taste such as whey protein and oligosaccharide may be eluted and removed, as well as, extraction ratio of globulin protein (in particular, glycinin and β-conglycinin) having high water retention ability and gelling ability to total protein may be increased, that is, transfer ratio of the globulin protein into the soluble fraction may be increased.

### • Water extraction from soybean raw material

Water extraction is carried out by adding water at about 3 to 20 times by weight, preferably 4 to 15 times by weight relative to an amount of fat-containing soybean, and thereby preparing a suspension of the fat-containing soybean. When adding ratio of water is high, extraction rate of water-soluble component is high and good separation may be obtained. However, when the adding ratio is too high, a concentration is necessary and thereby increasing in cost. In addition, when water extraction is repeated twice or more, extraction rate of water-soluble component may be improved.

An extraction temperature is not limited. When the temperature is high, an extraction rate of water-soluble component may be improved, but fat also tends to be soluble, and thereby, fat content in the soybean emulsion composition containing dietary fiber becomes low. Therefore, the extraction temperature is preferably 70°C or lower, more preferably 55°C or lower. Alternatively, the water extraction may be carried out at 5 to 80°C, more preferably 50 to 75°C.

Concerning an extraction pH (pH of a soybean suspension after adding water), as is the case in the extraction temperature, when the pH is high, an extraction rate of water-soluble component may be improved, but fat also tends to be soluble, and thereby, fat content in the soybean emulsion composition containing dietary fiber becomes low. On the other hand, when the pH is too low, an extraction rate of protein tends to be low. More specifically, the extraction may be carried out with adjusting a lower limit of pH to pH 6 or higher, pH 6.3 or higher, or pH 6.5 or higher. In addition, the extraction may be carried out with adjusting an upper limit of pH to pH 9 or lower, pH 8 or lower, or pH 7 or lower from a standpoint of increasing a separation efficiency of fat. Alternatively, the extraction may be carried out with adjusting pH to more alkaline, pH 9 to 12 from a standpoint of increasing an extraction rate of protein.

### • Solid-liquid separation after water extraction

After the water extraction, suspension of the fat-containing soybean is subjected to a solid-liquid separation such as centrifugation and filtration. In this case, it is important that most of fat including neutral lipid as well as polar lipid is not eluted to water-extract, but transferred to a fraction of insolubilized protein and fiber as a precipitate (insoluble fraction). More specifically, it is preferable that 70% by weight or more of fat of fat-containing soybean is transferred to the precipitate.

A neutral lipid and polar lipid may be transferred to an insoluble fraction by the solid-liquid separation after the water extraction. A fraction of the soybean emulsion composition containing dietary fiber may be obtained by recovering the insoluble fraction.

In the case of using centrifugation as solid-liquid separation, both two phase separation system and three phase separation system may be used. In the case of using the two phase separation system, an insoluble fraction as precipitate layer is recovered. In the case of using the three phase separation system, it may be separated to three fractions, (1) floating layer (cream fraction with lowest specific weight including fat), (2) mid layer (water-soluble fraction including a small amount of fat and large amounts of protein and sugar) and (3) precipitate layer (insoluble fraction including large amounts of fat and fiber). In this case, soluble fraction, mid layer (2), which contains lower amount of fat, is removed or recovered, and floating layer (1) or precipitate layer (3) is recovered. Alternatively, floating layer (1) and precipitate layer (3) are recovered in combination.

The obtained insoluble fraction (1) and (3) may be the soybean emulsion composition containing dietary fiber as is, or after subjecting to concentration step, heat pasteurization step and powderization step as necessary.

### (Statically heating treatment)

Next, it is important that at least the soybean emulsion composition containing dietary fiber is subjected to statically heating treatment. By this treatment, the emulsion composition becomes a paste form and a soybean paste-like food or soybean gel-like food may be produced. Any method may be used as long as the statically heating treatment may be performed under specific conditions. Examples of the statically heating treatment include heat treatment such as retort treatment, steamer, microwave oven, and oven, and preferable examples include statically steam heating treatment using retort treatment, or steamer. By performing the heat treatment under the specific conditions, the soybean emulsion composition containing dietary fiber is thickened.

### (Heating treatment condition)

It is important that a heating temperature is at least 90°C or higher. The temperature is more preferably 100 to 1130°C, and further preferably 110 to 125°C.

When the heating temperature is low, the thickening by the heat treatment does not proceed, and it tends not to be paste form.

Further, it is important that a heating time is at least more than 1 minute. The time is preferably 5 to 90 minutes, more preferably 10 to 60 minutes.

When the heating time is short, the thickening by the heat treatment does not proceed, and it will tends not to be paste form.

Before subjecting the soybean emulsion composition containing dietary fiber to a statically heating treatment, food ingredients, such as fruit juice, fruit pulp, vegetable, sugar, salt, fat, dairy product, cereal, starch, cacao mass, and poultry and fish product, or food additives, such as mineral, vitamin, emulsifier, thickening stabilizer, acidulant, and flavor, may also be added for adjusting taste and texture.

### (Soybean paste-like food or soybean gel-like food)

The soybean paste-like food or soybean gel-like food of the present invention is obtained by subjecting the above-mentioned specific soybean emulsion composition containing dietary fiber as it is, or a mixture of the composition and another raw material according to the type of food, to statically heating treatment to thicken or gel. That is, it is necessary to increase a viscosity after the heating than that before the heating treatment. A viscosity which becomes almost paste form is 1000 mPa•s when measured with a B-type viscometer (measurement time: 1 minute, measurement temperature: 10°C).

The soybean paste food or gel food of the present invention preferably contains a small amount of a thickener and a gelling agent. More specifically, a content of the thickener and the gelling agent in the food is preferably 10% by weight or less, more preferably 5% by weight or less, and most preferably 0% by weight (no addition).

### (Type of soybean paste-like food or soybean gel-like food)

A type of the soybean paste-like food or soybean gel-like food of the present invention is not particularly limited, and examples include high nutrition food; Western confectionery such as pudding, bavarois, jelly and brulee; Japanese confectionery such as steamed bun; various side dish such as chawan-mushi (steamed egg hotchpotch) and tofu; sauce; soup; and seafood substitute. Hereinafter, more specific aspects of the food will be described.

### (High nutrition food)

The soybean paste-like food or soybean gel-like food of the present invention may be a high nutrition food product as one of the embodiments. A high nutrition food is a nutraceutical product which is used for person who is difficult to receive nourishment from regular diet, for example, some post-surgical patient and aged person with chewing and swallowing difficulties. The high nutrition food includes protein, carbohydrate, fat, mineral and vitamin in a comprehensive manner.

More specifically, the high nutrition food includes protein, fat, carbohydrate, mineral and vitamin, and is in a form of semi-solid at ordinary temperature and has a caloric value of 0.5 kcal/ml or more. Preferably, it has energy composition of 10 to 25% of protein, 15 to 45% of fat, and 35% or more of carbohydrate, and a composition of 20 to 110 mg/100kcal of calcium and 10 to 70 mg/100kcal of magnesium. More preferably, it has energy composition of 16 to 20% of protein, 20 to 30% of fat, and 50 to 65% of carbohydrate, and a composition of 35 to 65 mg/100kcal of calcium and 15 to 40 mg/100kcal of magnesium.

In many cases, milk raw material such as milk protein, whey protein and casein sodium is generally used as a protein raw material in the high nutrition food. According to the present invention, the soybean emulsion composition containing dietary fiber may be used as substitution for a part or all of the milk raw material.

A taste of the obtained high nutrition food is comparable with that of high nutrition food prepared from milk protein only, and is significantly better than that of high nutrition food prepared from conventional soymilk or soybean protein isolate.

### (Sauce)

In one embodiment, the soybean paste-like food or soybean gel-like food of the present invention may be used as a sauce. Examples of the sauce include bechamel sauce (white sauce), mornay sauce, aurora sauce, nantua sauce, cream sauce, mustard sauce, soubise sauce, cheese sauce, hollandaise sauce, and pasta sauce such as carbonara sauce, which are generally subjected to statically heating treatment.

### (Soup)

In one embodiment, the soybean paste-like food or soybean gel-like food of the present invention may be used as a soup. Examples of soup include pumpkin soup, corn potage, clam chowder, and cream soup, which are generally subjected to statically heating treatment.

### (Confectionery)

In one embodiment, the soybean paste-like food or soybean gel-like food of the present invention may be used as a confectionery. Examples of confectionery include dessert such as pudding, bavarois, jelly, and brulee, and Western confectionery, Chinese confectionery, and Japanese confectionery, such as steamed bun, which are generally subjected to statically heating treatment.

### (Side dish)

In one embodiment, the soybean paste-like food or soybean gel-like food of the present invention may be used as a soup. Examples of the side dish include foods which are generally subjected to statically heating treatment, such as chawan-mushi (steamed egg hotchpotch) and tofu.

### (Seafood substitute)

In one embodiment, the soybean paste-like food or soybean gel-like food of the present invention may be used as a seafood substitute. Examples of seafood substitute include substitute of seafood, such as sea urchin, cod roe, mentaiko (seasoned cod roe), and shirako (soft roe).

### Examples

Hereinafter, the present invention will be described in more detail by way of Examples. In Examples, "%" and "part" mean a weight basis.

### (Production Example) - Preparation of soybean emulsion composition containing dietary fiber -

To 3.5 kg of soy flour which was subjected to wet heat treatment to make NSI of 59.4 was added with 4.5 times its weight of water at 50°C to prepare suspension liquid. The suspension liquid was stirred for 30 minutes with keeping warm for water extraction. The pH of the suspension liquid at this time was 6.7. Centrifugation with three phase separation system was continuously carried out at 6,000 × g to separate to (1) floating layer, (2) mid layer and (3) precipitate layer. Then, 6.3 kg of soybean emulsion composition containing dietary fiber as combination of the floating layer and the precipitate layer was recovered.

In the production of the soybean emulsion composition containing dietary fiber, the floating layer and the precipitate layer were mixed by changing the ratio into four patterns, and the mixtures were loaded to a homogenizer (manufactured by APV) and homogenized at 30 MPa to obtain soybean emulsion compositions containing dietary fiber (1) to (4).

The composition and viscosity of the obtained soybean emulsion composition containing dietary fiber were as follows.
Soybean emulsion composition containing dietary fiber (1): water content: 86.0%, dietary fiber content: 2.8%, average particle diameter: 15 µm, viscosity: 80 mPa•s, protein content/dry matter: 29.8%, fat content/dry matter: 50.3%, fat/protein: 168.7%
Soybean emulsion composition containing dietary fiber (2): water content: 82.5%, dietary fiber content: 3.3%, average particle diameter: 17 µm, viscosity: 200 mPa•s, protein content/dry matter: 33.5%, fat content/dry matter: 45. 6%, fat/protein: 136.1%
Soybean emulsion composition containing dietary fiber (3): water content: 80.0%, dietary fiber content: 4.1%, average particle diameter: 18 µm, viscosity: 670 mPa•s, protein content/dry matter: 37.8%, fat content/dry matter: 44. 5%, fat/protein 117.7%
Soybean emulsion composition containing dietary fiber (4): water content: 77.0%, dietary fiber content: 4.6%, average particle diameter: 22 µm, viscosity: 950 mPa•s, protein content/dry matter: 40.2%, fat content/dry matter: 43. 1%, fat/protein: 107.2%

### (Comparative Production Example 1)

To 1 part of soybean with removing hull and hypocotyl (NSI: 80) was added with 10 parts of water, and it was immersed at 25°C for 4 hours or more. To 1 part of the water-absorbed soybean with removing hull and hypocotyl was added with 3 parts of hot water (90°C), and the mixture was treated with a grinder, and then sodium bicarbonate solution was added to the mixture to adjust pH to 7.3 or more and 8.0 or less. This mixture was loaded to a homogenizer (manufactured by APV) and homogenized at 15 MPa. The homogenized ground solution was centrifuged at 3000G for 5 minutes to obtain soymilk and okara (bean curd refuse).

The obtained okara as it is or with adding appropriate amount of water was loaded to a homogenizer (manufactured by APV) and homogenized at 4 to 18 MPa.

The obtained okara has 76.5% of water content, 11.5% of dietary fiber content, 150 µm of average particle diameter, 15000 mPa•s of viscosity, 22.5% of protein content/dry matter, 14.7% of fat content/dry matter, and 65.3% of fat/protein.

### (Comparative Production Example 2)

To 1.0 kg of soy flour which was subjected to wet heat treatment to make NSI 59.4 was added with 6.0 times its weight of water at 50°C to prepare suspension liquid. The suspension liquid was loaded to a homogenizer (manufactured by APV) and homogenized at 30 MPa to obtain 6.0 kg of soybean emulsion composition containing dietary fiber.

The obtained soybean emulsion composition has 14.0% of water content, 2.0% of dietary fiber content, 17 µm of average particle diameter, 20 mPa•s of viscosity, 34.2% of protein content/dry matter, 26.3% of fat content/dry matter, and 79.6% of fat/protein.

### (Examples 1 to 4, Comparative Examples 1 to 2)

The soybean emulsion compositions containing dietary fiber (1) to (4) obtained in the above Production Example, the okara obtained in Comparative Production Example 1, and the soybean emulsion composition containing dietary fiber obtained in Comparative Production Example 2, total 6 samples, were subjected to statically heating treatment at 120°C for 30 minutes with a retort heating device (Hisaka Works, Ltd.) (Examples 1 to 4, Comparative Example 1 and Comparative Example 2, in order).

Viscosity of the heat-treated sample was measured with a B-type viscometer (measurement time: 1 minute, measurement temperature: 10°C), and 1000 mPa•s or more was judged to be a paste form.

Taste and texture were judged by sensory evaluation by panelists. The criteria of taste evaluation was: ⊙: rich and good, ○: good, △: feels watery, ×: watery, and ○ or better was judged as acceptable. The texture was evaluated as: ⊙: very smooth and good, ○: smooth and good, and △: slightly poor (rough), ×: not smooth and bad, and o or better was judged as acceptable.

**(Table 1) Result of test examples**

| | Example 1 | Example 2 | Example 3 | Example 4 | Comparative Example 1 | Comparative Example 2 |
|---|---|---|---|---|---|---|
| Average particle diameter | 15 µm | 17 µm | 18 µm | 22 µm | 150 µm | 17 µm |
| Water content | 86.0% | 82.5% | 80.0% | 77.0% | 76.5% | 86.0% |
| Dietary fiber content | 2.8% | 3.3% | 4.1% | 4.6% | 11.5% | 2.0% |
| Protein content/dry matter (%) | 29.8% | 33.5% | 37.8% | 40.2% | 22.5% | 34.2% |
| Fat content/dry matter (%) | 50.3% | 45.6% | 44.5% | 43.1% | 14.7% | 26.3% |
| Fat/protein (%) | 168.7% | 136.1% | 117.7% | 107.2% | 65.3% | 79.6% |
| Taste | ○ | ⊙ | ⊙ | ⊙ | ⊙ | ○ |
| Texture | ⊙ | ⊙ | ⊙ | ○ | △ | × |
| Viscosity before heating (mPa•s) | 80 | 200 | 670 | 950 | 15000 | 20 |
| Type of viscometer | BM | BM | BM | BM | BM | BM |
| Rotor | No.1 | No.1 | No.1 | No.2 | No.4 | No.1 |
| Number of rotation (rpm) | 30 | 30 | 6 | 12 | 6 | 60 |
| Viscosity after heating (mPa•s) | 1000 | 50000 | 98000 | 150000 | 18000 | 20 |
| Type of viscometer | BM | BM | BH | BH | BM | BM |
| Rotor | No.2 | No.4 | No.7 | No.7 | No.4 | No.1 |
| Number of rotation (rpm) | 12 | 6 | 20 | 4 | 6 | 60 |

Examples 1 to 4 had fluidity before the heat treatment, and thickened and changed into a paste form after the statically heating treatment. In addition, the taste was good, and the texture was smooth and good.

However, Comparative Example 1 having an average particle size of 100 µm or more was in a paste form before the heat treatment, and no state change was observed after the statically heating treatment. The condition after heating was rough and did not have a smooth texture.

Further, in Comparative Example 2 in which the dietary fiber content was 2.5 g or less, thickening after the statically heating treatment was not recognized.

### (Example 5)

The soybean emulsion composition containing dietary fiber (3) prepared in Production Example was subjected to statically heating treatment up to 120°C with fixed heating time for 10 minutes with a retort heating device (Hisaka Works, Ltd.). Viscosity of the soybean emulsion composition containing dietary fiber subjected to the statically heating treatment was measured with a B-type viscometer (measurement time: 1 minute, measurement temperature: 10°C), and 1000 mPa•s or more was judged to be a paste form. Taste and texture were evaluated by a sensory evaluation by panelists. With regard to the taste and texture, ○ or better was judged as acceptable.

**(Table 2)**

| Heating temperature (°C) | Unheated | 90 | 100 | 110 | 120 |
|---|---|---|---|---|---|
| Viscosity (mPa•s) | 670 | 1220 | 4850 | 2550 | 98000 |
| Type of viscometer | BM | BM | BM | BM | BH |
| Rotor | No. 1 | No. 2 | No. 3 | No.4 | No.7 |
| Number of rotation (rpm) | 6 | 12 | 12 | 60 | 20 |
| Taste | - | ○ | ⊙ | ⊙ | ⊙ |
| Texture | - | ○ | ⊙ | ○ | ⊙ |

Thickening was observed at a heating temperature of 90°C or higher, and the viscosity was 1000 mPa•s or more. The taste was good, and the texture was smooth and good.

### (Example 6)

The soybean emulsion composition containing dietary fiber (3) prepared in Production Example was subjected to statically heating treatment with fixed heating temperature at 120°C and with varied heating time for 5, 10, 20 or 30 minutes with a retort heating device (Hisaka Works, Ltd.). Viscosity of the soybean emulsion composition containing dietary fiber subjected to the statically heating treatment was measured with a B-type viscometer (measurement time: 1 minute, measurement temperature: 10°C), and 1000 mPa•s or more was judged to be a paste form. Taste and texture were evaluated by a sensory evaluation by panelists. With regard to the taste and texture, ○ or better was judged as acceptable.

**(Table 3)**

| Heating time (min) | Unheated | 5 | 10 | 20 | 30 |
|---|---|---|---|---|---|
| Viscosity (mPa•s) | 670 | 1000 | 2820 | 67000 | 98000 |
| Type of viscometer | BM | BM | BM | BM | BH |
| Rotor | No. 1 | No. 3 | No. 3 | No.4 | No. 7 |
| Number of rotation (rpm) | 6 | 60 | 30 | 6 | 20 |
| Taste | - | ○ | ⊙ | ⊙ | ⊙ |
| Texture | - | ○ | ○ | ⊙ | ⊙ |

Thickening was observed for a heating time of 5 minutes or longer, and the viscosity was 1000 mPa•s or more. The taste was good, and the texture was smooth and good.

### (Example 7)

To 65 parts of the soybean emulsion composition containing dietary fiber (3) prepared in Production Example was added with 0.5 part of salt and 34.5 parts of water to obtain preparation liquid. The preparation liquid was subjected to statically heating treatment with fixed heating temperature at 120°C and with varied heating time for 5, 10, 20 or 30 minutes with a retort heating device (Hisaka Works, Ltd.). Viscosity of the preparation liquid subjected to the statically heating treatment was measured with a B-type viscometer (measurement time: 1 minute, measurement temperature: 10°C), and 1000 mPa•s or more was judged to be a paste form. Taste and texture were evaluated by a sensory evaluation by panelists. With regard to the taste and texture, ○ or better was judged as acceptable.

**(Table 4)**

| Heating time (min) | Unheated | 5 | 10 | 20 | 30 |
|---|---|---|---|---|---|
| Viscosity (mPa•s) | 27.5 | 3000 | 5000 | 42000 | 50000 |
| Type of viscometer | BM | BM | BM | BM | BH |
| Rotor | No.1 | No.4 | No.4 | No.4 | No. 6 |
| Number of rotation (rpm) | 60 | 60 | 60 | 6 | 10 |
| Taste | - | ○ | ⊙ | ⊙ | ⊙ |
| Texture | - | ○ | ⊙ | ⊙ | ⊙ |

Thickening was observed for a heating time of 5 minutes or longer, and the viscosity was 1000 mPa•s or more. By adding salt, the thickening increased and the texture became smoother and better.

### (Example 8)

To 65 parts of the soybean emulsion composition containing dietary fiber (2) prepared in Production Example was added with 0.5 part of salt and 34.5 parts of water to obtain preparation liquid. The preparation liquid was subjected to statically heating treatment at 90°C for 30 minutes with a retort (Hisaka Works, Ltd.) or steamer. Viscosity of the preparation liquid subjected to the statically heating treatment was measured with a B-type viscometer (measurement time: 1 minute, measurement temperature: 10°C), and 1000 mPa•s or more was judged to be a paste form. Taste and texture were evaluated by a sensory evaluation by panelists. With regard to the taste and texture, ○ or better was judged as acceptable.

**(Table 5)**

| Heating time (min) | Unheated | Retort | Steamer |
|---|---|---|---|
| Viscosity (mPa•s) | 27.5 | 1560 | 1150 |
| Type of viscometer | BM | BM | BM |
| Rotor | No.1 | No. 3 | No.3 |
| Number of rotation (rpm) | 60 | 60 | 60 |
| Taste | - | ○ | ○ |
| Texture | - | ○ | ○ |

Thickening was observed regardless of the device of heat treatment, and the viscosity was 1000 mPa•s or more. The taste was good, and the texture was smooth and good.

### (Example 9) - High nutrition food -

The soybean emulsion composition containing dietary fiber (2) prepared in Production Example was blended according to the example of formulation in the following table with a homomixer. The obtained mixture was loaded to a homogenizer (manufactured by APV), and homogenized at 50 MPa. The obtained homogenized liquid was filled into a retort cup, sealed, loaded to a retort sterilizer (RCS-40RTG, manufactured by Hisaka Works, Ltd.), and treated at 121°C for 20 minutes to produce a high nutritious food.

**(Table 6) Example of formulation**

| | (Unit: Part) |
|---|---|
| Isolated soybean protein (*1) | 2.5 |
| Soybean emulsion composition containing dietary fiber | 40.0 |
| Dextrin | 13.5 |
| Refined rapeseed oil | 1.5 |
| Mineral mixture | 0.8 |
| Emulsifier | 0.3 |
| Crystalline cellulose (*2) | 0.2 |
| Water | Rest |
| Total | 100 |

| | |
|---|---|
| (*1) Prorina(TM) RD-1 (manufactured by Fuji Oil Co., Ltd.) (*2) Ceolus(TM) RC-N81 (manufactured by Asahi Kasei Chemicals Corporation) | |

Example 9 provided a soybean paste-like food, and the taste and texture was good.

### (Example 10) - Seafood substitute -

The soybean emulsion composition containing dietary fiber (4) prepared in Production Example was blended according to the example of formulation in the following table with a homomixer. The obtained mixture was loaded to a homogenizer (manufactured by APV). The obtained homogenized liquid was filled into a retort pouch, sealed, loaded to a steamer, and subjected to statically heating treatment at 90°C for 20 minutes to produce a seafood substitute.

**(Table 7) Example of formulation**

| | (Unit: Part) |
|---|---|
| Soybean emulsion composition containing dietary fiber | 57.5 |
| Vegetable fat (*1) | 23.0 |
| Modified starch | 6.04 |
| Salt | 0.57 |
| Flavor | 0.29 |
| Colorant | 0.23 |
| Seasoning | Rest |
| Total | 100 |

| | |
|---|---|
| (*1) Nutromaster SVC (manufactured by Fuji Oil Co., Ltd.) | |

Example 10 provided a soybean paste-like food or soybean gel-like food, and the food had a smooth and good texture close to that of sea urchin.

### Industrial Applicability

By subjecting a specific soybean emulsion composition containing dietary fiber to statically heating treatment, a soybean paste-like food or soybean gel-like food having a good taste, and a smooth and favorable texture was obtained. This soybean paste-like food or soybean gel-like food not only responds to the diversification of consumer's preference, but also satisfies the recent demand for additive reduction and the demand for food that enables to easily obtain soybean health effect.

## Claims

1. A method for producing a soybean paste-like food or soybean gel-like food, comprising subjecting statically heating treatment to a soybean emulsion composition containing dietary fiber having 2.5% by weight or more of dietary fiber content, 25% by weight or more of protein content on a dry matter basis, 25% by weight or more of fat content (referred to as a chloroform/methanol mixed solvent extract) on a dry matter basis, 10 to 100 µm of average particle diameter, 70% by weight to 90% by weight of water content, and 3000 mPa•s or less of viscosity.

2. The method for producing a soybean paste-like food or soybean gel-like food according to claim 1, wherein the soybean emulsion composition containing dietary fiber described in claim 1 has 10 to 30 µm of average particle diameter and 1000 mPa•s or less of viscosity.

3. The method for producing a soybean paste-like food or soybean gel-like food according to claim 1, wherein the fat content of the soybean emulsion composition containing dietary fiber described in claim 1 is 100% by weight or more relative to the protein content.

4. The method for producing a soybean paste-like food or soybean gel-like food according to claim 2, wherein the fat content of the soybean emulsion composition containing dietary fiber described in claim 2 is 100% by weight or more relative to the protein content.

5. A method for producing a soybean paste-like food or soybean gel-like food, comprising subjecting a food or drink containing the soybean emulsion composition containing dietary fiber described in claim 1 to statically heating treatment.

6. A method for producing a soybean paste-like food or soybean gel-like food, comprising subjecting a food or drink containing the soybean emulsion composition containing dietary fiber described in claim 2 to statically heating treatment.

7. A method for producing a soybean paste-like food or soybean gel-like food, comprising subjecting a food or drink containing the soybean emulsion composition containing dietary fiber described in claim 3 to statically heating treatment.

8. A method for producing a soybean paste-like food or soybean gel-like food, comprising subjecting a food or drink containing the soybean emulsion composition containing dietary fiber described in claim 4 to statically heating treatment.

9. The method for producing a soybean paste-like food or soybean gel-like food according to claim 1, wherein the statically heating treatment is a retort heat treatment.

10. The method for producing a soybean paste-like food or soybean gel-like food according to claim 2, wherein the statically heating treatment is a retort heat treatment.

11. The method for producing a soybean paste-like food or soybean gel-like food according to claim 3, wherein the statically heating treatment is a retort heat treatment.

12. The method for producing a soybean paste-like food or soybean gel-like food according to claim 4, wherein the statically heating treatment is a retort heat treatment.

13. The method for producing a soybean paste-like food or soybean gel-like food according to claim 5, wherein the statically heating treatment is a retort heat treatment.

14. The method for producing a soybean paste-like food or soybean gel-like food according to claim 6, wherein the statically heating treatment is a retort heat treatment.

15. The method for producing a soybean paste-like food or soybean gel-like food according to any one of claims 1 to 14, wherein a heating temperature is 90°C or higher and a heating time is 1 minute or longer, in the statically heating treatment.
